# EUROPEAN PATENT APPLICATION

(11) **EP 1 542 482 A2**
(43) Date of publication of application: **15.06.2005**
(21) Application number: 04257336.0
(22) Date of filing: 25.11.2004
(51) Int. Cl.: H04Q 7/22

(54) **Method and apparatus for inserting information into a unused portion of a text message**

(30) Priority: 12.12.2003 US 735204
(71) Applicant: LUCENT TECHNOLOGIES INC., Murray Hill, New Jersey 07974-0636 (US)
(72) Inventor: Jenkin, Mark of, Lyme Regis Dorset DT7 3AD (GB)
(74) Representative: Watts, Christopher Malcolm Kelway, Dr.

(57) **Abstract**

A method and apparatus for placing a targeted advertisement into a text message is provided. A text message occupying only a portion of its permitted field is received at an SMSC gateway 108. The gateway 108 passes the text message to an advetext engine 110. The advertext engine 110 identifies a targeted advertisement based on information associated with the text message, the sender and/or the recipient, and places the targeted advertisement in the unused portion of the text message. Thereafter, the text message with the advertisement are delivered to the intended recipient.

## Description

### BACKGROUND OF THE INVENTION

### 1. FIELD OF THE INVENTION

This invention relates generally to telecommunications, and, more particularly, to text messaging.

### 2. DESCRIPTION OF THE RELATED ART

Text messaging or Short Message Service (SMS) has become popular with cellular or mobile telephone users. Typically, a text message generated by a mobile telephone user is delivered to an intended recipient, such as another mobile telephone user. The process of forwarding the text message to the intended recipient is accomplished by a Short Message Service Center (SMSC). The SMSC provides a number of services, including regulating the transfer of text messages between mobile telephones. When a user sends a text message (SMS message) to a recipient, the mobile telephone actually sends the message to the SMSC. The SMSC stores the message and then delivers it to the intended recipient when they are available. The SMSC usually has a configurable time limit for how long it will store the message, and the sender can usually specify a shorter time limit if desired. Additionally the SMSC will keep track of any charges that are incurred. Generally, there is at least one Short Message Service Centre (SMSC) per network. For bulk transmission and reception of SMS messages, SMSCs have conventional, fixed, network interfaces as well as mobile network interfaces. A number of protocols have been defined to support this sort of wire-line access. Short Message Peer to Peer (SMPP) protocol is an open industry standard messaging protocol designed to simplify integration of data applications with wireless mobile networks such as GSM, TDMA, CDMA and PDC. The protocol is widely deployed in the mobile telecommunications industry.

Users have discovered many advantages of this communication medium over e-mails and conventional telephone calls. For example, unlike an e-mail, an SMS message is more likely to be read by a person at any one time, since many people typically have their mobile telephones at arms reach 24 hours a day. Further, unlike a conventional telephone call, an SMS message is automatically stored and can be re-read. This proves particularly useful in the case of detailed information that might otherwise be forgotten. Additionally, unlike e-mail, SMS is relatively SPAM free. Further, SMS messages are discreet. Unlike a conventional telephone call, the recipient does not have to interrupt his/her meal, meeting, conversation, *etc.* to field the call, yet he/she may still receive the information in the SMS message. The discreet nature of text messaging allows the recipient to stay in touch with minimal disturbance. Further, SMS messages are cheaper than a conventional telephone call, yet in many instances the same information may be conveyed.

Typically, an SMS message is allocated a predetermined fixed amount of space. For example, a user may be allowed to transmit an SMS message that is as long as 160 characters. Typically, many SMS messages may be considerably shorter, such as only about 100 characters in length. However, the allowed length is fixed and does not adjust to the size of the actual message. Thus, in many instances much of the allowed length is unused or wasted.

The present invention is directed to overcoming, or at least reducing, the effects of one or more of the problems set forth above.

### SUMMARY OF THE INVENTION

In one aspect of the instant invention, a method is provided. The method comprises receiving a text message having an unused region, inserting information into the unused region; and forwarding the text message to an intended recipient.

In another aspect of the instant invention, an advertext engine is provided. The advertext engine comprises a controller adapted to receive a text message having an unused region, insert information into the unused region, and forward the text message to an intended recipient.

In yet another aspect of the instant invention a method is provided in which a text message comprising an embedded advertisement is received.

In still another aspect of the instant invention a method is provided in which a text message comprising an embedded advertisement is transmitted.

### BRIEF DESCRIPTION OF THE DRAWINGS

The invention may be understood by reference to the following description taken in conjunction with the accompanying drawings, in which like reference numerals identify like elements, and in which:
Figure 1 is a block diagram of a communications system, in accordance with one embodiment of the present invention;
Figure 2 depicts one embodiment of a flow chart representing at least a portion of the operation of a SMSC gateway of the communications system of Figure 1; and
Figure 3 depicts one embodiment of a flow chart representing at least a portion of the operation of an advertext engine of the communications system of Figure 1; and
Figure 4 depicts one embodiment of a flow chart representing at least a portion of a routine that may be used to identify an appropriate advertisement to be inserted into a text message by the advertext engine of Figure 1.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification:- It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

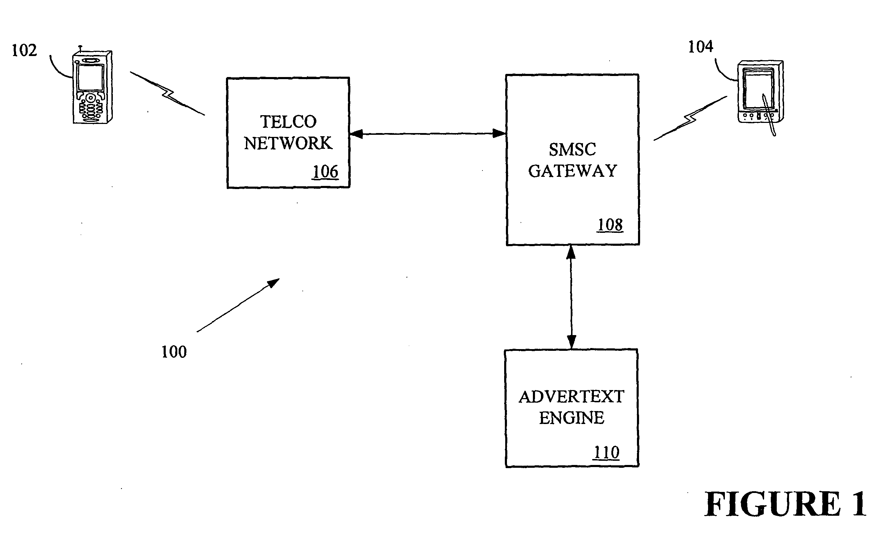

Turning now to the drawings, and specifically referring to Figure 1, a communications system 100 is illustrated, in accordance with one embodiment of the present invention. Those skilled in the art will appreciate that the communications system 100 of Figure 1 may take on any of a wide variety of systems, such as a Universal Mobile Telephone System (UMTS), and, in fact, may find application in substantially any system that supports data and/or voice communications, such as SMS. The communications system 100 allows one or more mobile devices 102, 104 to communicate with one another, particularly using text or SMS messages. The mobile devices 102, 104 may take the form of any of a variety of devices, including cellular phones, personal digital assistants (PDAs), laptop computers, digital pagers, wireless cards, and any other device capable of accessing a telephone company (Telco)network 106 and/or a data network.

In one embodiment, the mobile device 102 communicates with the Telco network 106, sending a desired text message, such as "I'm on my way home." The text message is accompanied by information regarding the intended recipient, such as the intended recipient's telephone number, email address, instant message identification, internet address, or the like. The Telco network 106 responds to the text message by forwarding it to an SMSC gateway 108 along with any pertinent information, such as time-of-day, location, *etc.* The SMSC gateway 108 is generally responsible for forwarding the text message to the intended recipient, such as the mobile device 104. The SMSC gateway 108 may forward the text message through any of a variety of routes, including other telephone company networks (not shown), the internet (not shown), other private networks (not shown), or the like.

The operation of the mobile devices 102, 104, the Telco network 106 and the SMSC gateway 108, except as discussed below, are conventional, and thus, need not be described in greater detail for a proper understanding of the instant invention. Rather, such details are omitted to avoid unnecessarily obscuring the instant invention.

In the instant invention, the SMSC gateway 108 includes hardware, software, or a combination thereof to identify select "callers" or "senders" that have requested specialized treatment of their SMS messages. In particular, the SMSC gateway 108 operates to identify those callers that have permitted advertisements to be inserted into their SMS messages. Not all callers may have elected to participate in this service. Thus, the SMSC gateway 108 includes a listing or database of participating callers. The SMSC gateway operates to identify select text messages and forward those messages to an advertext engine 110 where appropriate advertisements are selected and inserted into the identified text messages, as discussed more fully below.

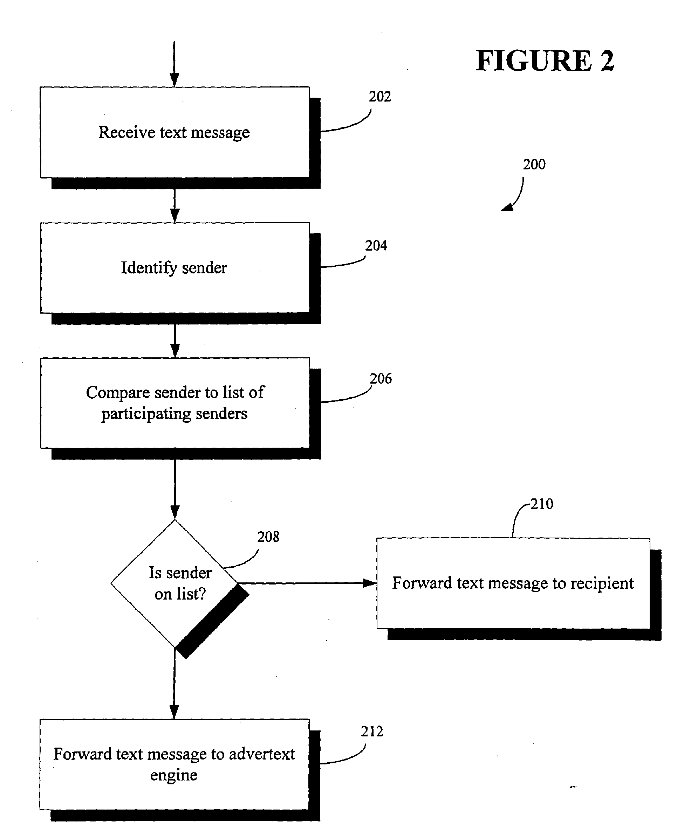

A flow chart describing at least one embodiment of an identification process 200 performed by the SMSC gateway 108 is shown in Figure 2. In particular, the process begins with the text message being received in block 202. The identity of the sender is typically included with the text message. The sender may be identified by any of a variety of unique identifiers. For example, the telephone number of the mobile device 102 may be included. Alternatively, an email address associated with the sender may be included with the text message. Other unique identifiers, such as a user ID and password, may be likewise employed. In any event, the text message has some unique identifying indicia associated with it that may be compared against a list or database of participants, as shown in block 206.

Those skilled in the art will appreciate that the listing or database may be constructed from information gathered during a registration process. That is, a group of individuals who use text messaging may be contacted and offered an opportunity to participate in exchange for certain incentives. For example, users who elect to participate may receive rewards based on the number of text messages that have advertisements inserted therein. The rewards may take any of a variety of forms, such as cash, discounts off of services or merchandise, frequent flier miles or points, *etc.*

If the sender is determined to not be on the list at decision block 208, then control passes to block 210 where the SMSC gateway 108 proceeds to forward the text message to the intended recipient without adding an advertisement. On the other hand, if the sender is on the list, then control passes to block 212 where the text message is forwarded to the advertext engine 110 so that an appropriate advertisement may be inserted therein.

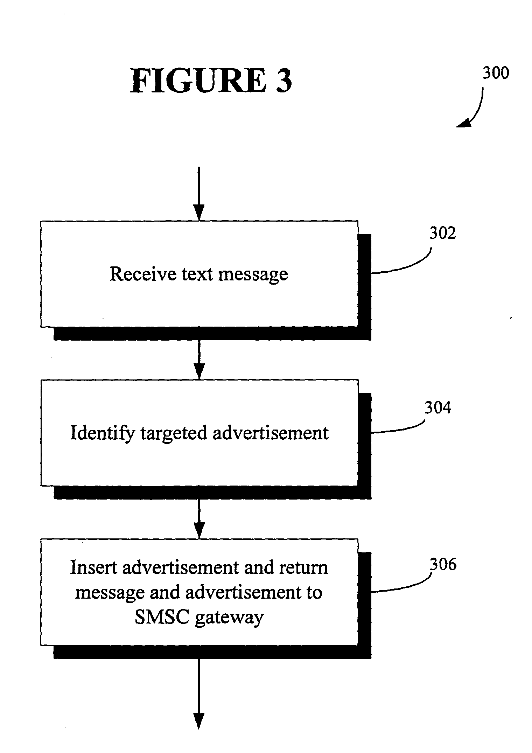

Turning now to Figure 3, a flow chart describing at least one embodiment of an advertisement selection process 300 performed by the advertext engine 110 is shown. The process begins at block 302 with the advertext engine 110 receiving the text message from the SMSC gateway 108. At block 304, an advertisement suitable for the intended recipient is selected, and at block 306, the selected advertisement is inserted into the text message and returned to the SMSC gateway 108 so that the text message and accompanying ad may be delivered to the intended recipient. For example, the message may now read "I'm on my way home. Eat at Joe's Diner - 1200 Main Street."

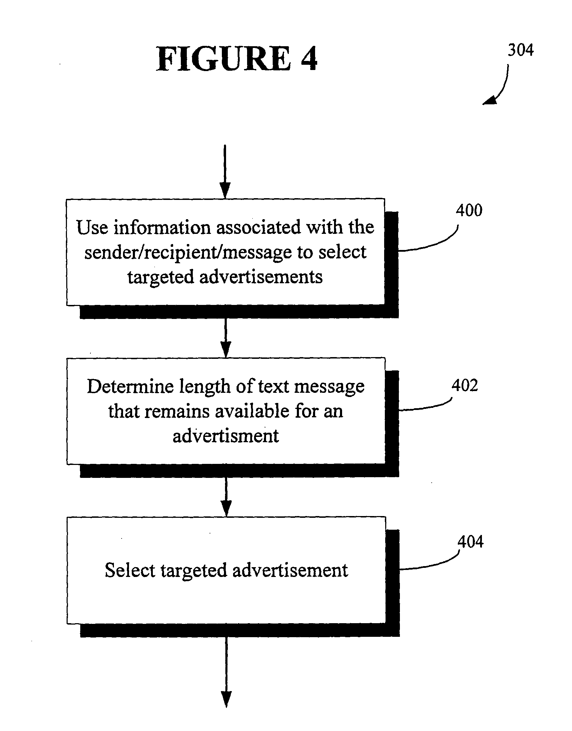

One embodiment of the process of identifying the targeted advertisement in block 304 is shown in Figure 4. Beginning at block 400, information associated with the sender/recipient/message may be used to select a targeted advertisement or to at least produce a reduced pool of targeted advertisements. For example, information associated with the message may include time-of-day of the sender and/or the recipient, location, actual content of the message, *etc.* Thus, during meal times, the advertext engine 110 may select advertisements associated with meals or food. Similarly, messages sent late at night may cause the advertext engine to select advertisements associated with nightclubs or stores that are open 24-hours. The actual text of the message may also be mined to illicit clues regarding suitable advertisements. For example, should the text message mention driving or groceries, advertisements for gasoline stations or grocery stores may be selected. Further, if the message includes information regarding location, then the address of a nearby gas station or grocery may also be provided.

Information associated with both the sender and the recipient may be maintained in a database in the advertext engine. The information may be obtained during the registration process or from other known sources. The information may include age, sex, language, interests, *etc*. This personal information may likewise be used to select appropriate advertisements. For example, it may be useful to select one advertisement for an 18 year old female, and an entirely different advertisement for a 60 year old male. Income level, car type, credit ratings, *etc*. may all be useful information to aid in selecting an appropriate advertisement.

Further, in some instances it may be useful to consider special requests of an advertiser. For example, some advertisers may request all males in a certain age group during a certain time of day or day of the week. Additionally, in some instances if the advertext engine 110 fails to identify any characteristics of the message/sender/recipient that identifies a targeted advertisement, then the advertext engine 110 may default to a generic advertisement that targets a large segment of consumers.

In block 402, the length of the text message that remains available for the advertisement is determined. For example, if the actual text message is 60 characters long and the field is 160 characters long, then 100 characters remain for the advertisement. The available length may be used to further eliminate certain advertisements, or alternatively, to shorten or abbreviate some advertisements.

Once the pool of suitable advertisements is determined, one is selected. The actual targeted advertisement to be inserted into the text message may be selected from the pool on a random basis, on a least recently used basis, alphabetically, or any of a variety of other selection methods.

On the other hand, in some instances, it may be useful to bypass blocks 400, 402 and send all recipients the same advertisement, at least for a relatively short duration of time. For example, during the Super bowl a company that is investing large amounts of money to produce and air a commercial may wish to "flood" the airwaves with advertisements regarding its product during the commercial. In instances like these, the advertisement could be customized to reflect current conditions. For example, the advertisement could reflect the score, "20-15 Cowboys! Time for a burger!"

While the specification has been written from the standpoint of inserting an advertisement into the unused portion of a text message, those skilled in the art will appreciate that other useful information could be similarly embedded into a text message without departing from the spirit and scope of the instant invention. For example, a link to a web cite, campaign advertisements, information on voter initiatives, public service announcement, storm warnings, civil defense warnings, and the like could be placed in the unused portion of the text message.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the control units cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. It is therefore evident that the particular embodiments disclosed above may be altered or modified and all such variations are considered within the scope and spirit of the invention. Accordingly, the protection sought herein is as set forth in the claims below.

## Claims

1. A method, comprising:
receiving a text message having an unused region;
inserting information into the unused region; and
forwarding the text message to an intended recipient.

2. A method, as set forth in claim 1, wherein inserting information into the unused region further comprises inserting an advertisement into the unused region.

3. A method, as set forth in claim 2, wherein inserting the advertisement into the unused region further comprises selecting at least one of a plurality of advertisements based upon information associated with the text message.

4. A method, as set forth in claim 3, wherein selecting at least one of the plurality of advertisements based upon information associated with the text message further comprises selecting at least one of the plurality of advertisements based upon a time at which the text message was sent.

5. A method, as set forth in claim 3, wherein selecting at least one of the plurality of advertisements based upon information associated with the text message further comprises selecting at least one of the plurality of advertisements based upon content of the text message.

6. A method, as set forth in claim 2, wherein inserting the advertisement into the unused region further comprises selecting at least one of a plurality of advertisements based upon information associated with a sender of the text message.

7. A method, as set forth in claim 6, wherein selecting at least one of the plurality of advertisements based upon information associated with the sender of the text message further comprises selecting at least one of the plurality of advertisements based upon personal information associated with the sender of the text message.

8. A method, as set forth in claim 6, wherein selecting at least one of the plurality of advertisements based upon information associated with the sender of the text message further comprises selecting at least one of the plurality of advertisements based upon a location of the sender of the text message.

9. A method, as set forth in claim 2, wherein inserting the advertisement into the unused region further comprises selecting at least one of a plurality of advertisements based upon information associated with the intended recipient of the text message.

10. A method, as set forth in claim 9, wherein selecting at least one of the plurality of advertisements based upon information associated with the intended recipient of the text message further comprises selecting at least one of the plurality of advertisements based upon personal information associated with the intended recipient of the text message.
